# FASCICULE DE BREVET EUROPEEN

(11) **EP 2 807 054 B1**
(45) Date de publication et mention de la délivrance du brevet: **29.05.2019**
(21) Numéro de dépôt: 12790576.8
(22) Date de dépôt: 26.11.2012
(51) Int. Cl.: B60Q 1/14, B60Q 1/12, F21S 41/24, F21S 43/251, F21S 41/16

(54) **ECLAIRAGE FRONTAL DE VEHICULE**
FAHRZEUGFRONTBELEUCHTUNG
VEHICLE FRONT LIGHTING

(30) Priorité: 28.11.2011 FR 1160834
(43) Date de publication de la demande: 03.12.2014
(73) Titulaire: PSA Automobiles SA, 78300 Poissy (FR); Valeo Vision, 93012 Bobigny (FR)
(72) Inventeur: SURUGUE, Michel, F-91190 Gif Sur Yvette (FR); LEFRANC, Sébastien, F-91370 Verrieres Le Buisson (FR); DELFOSSE, Jean Sébastien, Columbus Indiana (US); BA, Sidy, F-77550 Moissy Cramayel (FR)
(86) Numéro de dépôt international: PCT/EP2012/073644
(87) Numéro de publication internationale: WO 2013/079451

(56) Documents cités:
- EP-A1- 1 826 476
- EP-A1- 2 060 441
- DE-A1-102007 038 077
- DE-A1-102007 038 563
- DE-A1-102009 054 249

## Description

La présente invention concerne de manière générale l'éclairage frontal d'un véhicule automobile.

Il est connu dans l'art antérieur des projecteurs lumineux adaptatifs, tels que ceux décrits par exemple dans le document FR2908705A1. Ce document décrit un procédé d'ajustement de la portée et de l'intensité d'éclairage frontal d'un véhicule porteur dans une gamme d'utilisation "LB", pour "low beam" située entre une position en feux de croisement et une position dite "autoroute" ou "motorway E" (d'un éclairage moindre que la position en feux de route), afin de ne pas éblouir un véhicule suivi : plus le véhicule suivi est proche en temps ou en distance du véhicule porteur, plus la portée et/ou l'intensité d'éclairage sont réduites. En contrepartie, ce système présente l'inconvénient de ne proposer uniquement qu'un éclairage type feux de croisement non éblouissant. Ce type d'éclairement est encadré par la réglementation Européenne en vigueur sur des critères de vitesse et de distance. Ce qui revient à dire que ce système laisse un véhicule suivi à moyenne distance par le véhicule porteur dans une zone complètement sombre, ce qui n'apporte aucune aide au conducteur du véhicule porteur pour visualiser l'entourage du véhicule suivi. Egalement, ce système procure un éclairage insuffisant lorsque le véhicule suivi est au-delà de la limite réglementaire correspondant à l'éclairage en position "autoroute", mais en deçà de la distance réglementaire correspondant aux feux de route, plus puissants.

Par ailleurs, le document WO 2009062596 décrit un dispositif d'éclairage frontal qui permet d'isoler dans une fenêtre sombre un véhicule cible suivi. Cette fenêtre sera de taille et de portée identiques quelle que soit la position en distance de cette cible par rapport au porteur.

Ce dispositif présente alors l'inconvénient de plonger le véhicule cible dans un tunnel sombre en raison du contraste lumineux qui existe entre le faisceau lumineux du véhicule porteur et le faisceau lumineux du véhicule cible. En d'autres termes, il est des situations où le faisceau lumineux du véhicule porteur est plus puissant que celui du véhicule cible. Il en résulte une gêne pour la cible qui sera dans ce tunnel de plus en plus sombre lorsque le véhicule porteur se rapproche. Cette effet de contraste génère une réduction de la visibilité du conducteur du véhicule cible qui peut engendrer des risques de comportement non habituel de ce conducteur.

Il est également connu du document DE102007038563, un procédé adaptif d'éclairage frontal d'un véhicule porteur, conforme au préambule de la revendication 1.

Un but de la présente invention est de répondre aux inconvénients des documents de l'art antérieur mentionnés ci-dessus et en particulier, tout d'abord, de proposer un procédé d'éclairage de véhicule qui procure une bonne sécurité en illuminant une grande partie d'une scène nocturne, sans pour autant éblouir un véhicule suivi, ni provoquer de gêne visuelle pour le conducteur du véhicule cible. La présente invention permet ainsi de générer un faisceau lumineux dans lequel est ménagée une fenêtre sombre, la longueur du faisceau lumineux étant cependant limitée pour éviter l'effet de contraste qui gène le conducteur du véhicule cible.

Pour cela un premier aspect de l'invention concerne un procédé conforme à la partie caractérisante de la revendication 1.

Le procédé selon l'invention limite l'impact de la création du tunnel sombre sur le conducteur du véhicule cible. En effet, ce tunnel sombre limité, qui permet d'éclairer les côtés de ce véhicule à l'usage du conducteur du véhicule porteur, ne sera pas une gêne pour le conducteur du véhicule cible, car selon l'invention, l'éclairage est régulé en fonction de la position relative du véhicule cible par rapport au véhicule porteur. En d'autres termes, le véhicule cible sera baigné dans le même tunnel sombre quelle que soit sa position relative par rapport au véhicule porteur, ceci grâce à la régulation de l'éclairage frontal, ce tunnel sombre étant défini en adaptant la longueur du faisceau lumineux du véhicule porteur qui s'étend de part et d'autre du véhicule cible de sorte à ne pas dépasser la portée de l'éclairage du véhicule cible.
Selon un mode de réalisation, ladite longueur est la plus petite longueur du faisceau d'éclairage du véhicule cible et elle est notamment sensiblement égale à soixante mètres.

la régulation de l'éclairage frontal est le résultat d'une addition de la distance inter-véhicule avec une valeur correspondant à une longueur d'un faisceau d'éclairage du véhicule cible, une telle longueur étant par exemple sensiblement égale à soixante mètres.

Cette mise en oeuvre procure une bonne efficacité en agissant sur les deux projecteurs du véhicule.

De manière très avantageuse, le véhicule cible est un véhicule suivi plus lent que ledit véhicule porteur, et l'étape de régulation de l'éclairage frontal est une étape de réduction du flux lumineux et/ou de la portée au cours du temps.

Un véhicule rattrapé n'est donc pas ébloui ni plongé dans un tunnel très sombre avec un éclairage de la part du véhicule porteur sur les côtés loin devant le véhicule cible. Le contraste entre le faisceau lumineux du véhicule porteur et le faisceau lumineux du véhicule cible est donc limité ou évité, l'invention permettant néanmoins de procurer une bonne visibilité au conducteur du véhicule porteur mettant en oeuvre l'invention.

De manière avantageuse, la régulation de l'éclairage conduit à l'adoption d'un éclairage en feux de croisement si la distance inter-véhicule est inférieure à une valeur minimale.

L'invention est compatible avec les réglementations en conduisant à l'adoption d'un éclairage de type feux de croisement si le deuxième véhicule est proche du véhicule porteur de l'invention.

Avantageusement, le véhicule cible est un véhicule suivi plus rapide que ledit véhicule porteur, et l'étape de régulation de l'éclairage frontal est une étape d'augmentation du flux lumineux et/ou de la portée au cours du temps.

Un véhicule suivi et s'éloignant du véhicule porteur n'est donc pas ébloui ni plongé dans un tunnel très sombre avec un éclairage de la part du véhicule porteur sur les côtés loin devant le véhicule cible. Le contraste entre le faisceau lumineux du véhicule porteur et le faisceau lumineux du véhicule cible est donc limité ou évité, et l'invention permet néanmoins de garder une bonne visibilité au véhicule porteur mettant en oeuvre l'invention.

De manière avantageuse, la régulation de l'éclairage conduit à l'adoption d'un éclairage en feux de route si la distance inter-véhicule est supérieure à une valeur de non-éblouissement.

Un second aspect de l'invention est un projecteur adaptatif comprenant une source lumineuse apte à mettre en oeuvre le procédé décrit ci-dessus.

Un troisième aspect de l'invention est un véhicule automobile dont l'éclairage frontal est adapté par le procédé selon le premier aspect de l'invention.

Alternativement, le véhicule automobile comporte au moins un projecteur selon le deuxième aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un véhicule suivant de nuit à courte distance un deuxième véhicule ;
- la figure 2 représente la situation ou le deuxième véhicule est situé au loin devant le premier véhicule ;
- la figure 3 représente la situation où le deuxième véhicule est à distance intermédiaire devant le premier véhicule dont l'éclairage est adapté par le procédé de la présente invention.

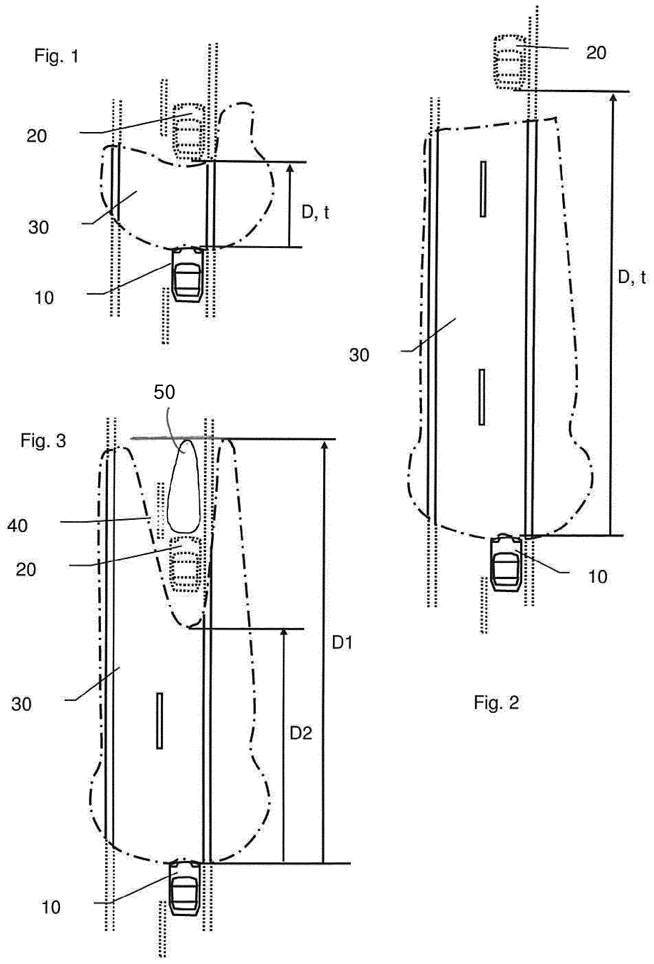

La figure 1 représente un premier véhicule 10, appelé véhicule porteur, suivant à courte distance un deuxième véhicule 20, appelé véhicule cible. Le véhicule 10 est équipé d'un dispositif de détection et de reconnaissance de scène capable de mesurer la distance inter-véhicule (D). Si la distance (D) est inférieure à une valeur minimale, le véhicule porteur 10 adopte un éclairage de type feux de croisement pour ne pas éblouir le véhicule cible 20. La zone 30 est alors éclairée, et les parties visibles par le conducteur du véhicule porteur 10 sont représentées en traits pleins, et les zones non éclairées sont représentées en traits pointillés.

La figure 2 représente la situation où le deuxième véhicule 20 est situé au loin devant le véhicule porteur 10 et la distance (D) est supérieure à une valeur de non-éblouissement, et le véhicule porteur 10 peut adopter un éclairage de type plein phares ou feux de route. Dans ce cas, l'éclairage est maximal et la zone éclairée 30 est importante.

La figure 3 représente la situation intermédiaire dans laquelle le deuxième véhicule 20 est situé en deçà de la distance (D) limite de non-éblouissement, mais au-dessus de la distance minimale où le véhicule porteur 10 doit passer en feux de croisement. L'invention permet d'améliorer la vision du conducteur du véhicule 10 en créant une fenêtre sombre 40 sur le véhicule cible 20, tout en limitant la longueur du faisceau lumineux du véhicule porteur 10 de part et d'autre du véhicule cible 20, de manière à ne pas dépasser la portée du faisceau lumineux 50 généré par ce véhicule cible 20. La distance qui sépare le véhicule porteur 10 d'une extrémité du faisceau d'éclairage du véhicule cible 20 est illustrée par la référence D1.de. A titre d'exemple, l'étape de régulation de l'éclairage frontal du véhicule porteur peut consister en une réduction de la portée, c'est-à-dire sa longueur, du faisceau lumineux généré par le véhicule porteur 10 qui s'étend de part et d'autre du véhicule cible 20. Cette longueur peut ainsi résulter de la mesure de la distance inter-véhicule à laquelle est ajoutée une valeur déterminée égale à la longueur la plus petite du faisceau d'éclairage d'un véhicule existant sur le marché. A titre d'exemple, cette valeur déterminée peut être égale à soixante mètres. On garantit ainsi qu'aucun conducteur de véhicule suivi ne subira de gêne résultant du contraste évoqué plus haut.

Cette fenêtre sombre 40 est créée en limitant une partie des faisceaux lumineux émis par les projecteurs du véhicule porteur 10. On peut limiter les faisceaux lumineux par occultation physique par exemple ou en agissant directement sur la source lumineuse : si cette dernière comporte plusieurs sources, on peut en éteindre une par exemple. Concomitamment, l'intensité du flux lumineux et/ou la portée des projecteurs est adaptée de manière à maintenir le véhicule suivi dans un tunnel sombre limité ou constant (entre la distance D1 et D2), de sorte que la visibilité pour le conducteur du véhicule porteur 10 soit optimale, sans pour autant éblouir ou gêner le véhicule cible 20.

La portée de l'éclairage du véhicule porteur 10 est supérieure à celle de son éclairage en position feux de croisement, mais le tunnel sombre est de taille, notamment sa longueur, limitée autour du véhicule cible. La distance D1-D2 est sensiblement constante est inférieure ou égale à la portée du faisceau d'éclairage du véhicule cible 20. Le conducteur de ce dernier n'est ainsi pas gêné.

L'invention permet un fonctionnement, une adaptation et une régulation de l'éclairage fournit par le véhicule porteur 10 aussi bien si le véhicule cible 20 suivi est plus lent que s'il est plus rapide que le véhicule porteur 10. Dans le premier cas, si le véhicule cible 20 est plus lent, le véhicule porteur 10 va se rapprocher du véhicule cible 20. Il va donc passer de l'éclairage feux de route, selon la figure 2, à l'éclairage adapté par le procédé selon l'invention, en fonction de la distance avec création d'un tunnel sombre limité autour du véhicule cible 20 par l'adaptation du flux et/ou de la portée de l'éclairage. En continuant de se rapprocher du véhicule cible 20 et lorsque la distance inter-véhicule est inférieur à D1, le véhicule porteur 10 passe en éclairage de type feux de croisement en raison du fait que le véhicule porteur 10 suit le véhicule cible 20 à faible distance.

Au contraire, si le véhicule cible 20 est plus rapide que le véhicule porteur 10, alors ce dernier va partir d'un éclairage en feux de croisement pour adapter, en fonction de la distance, l'éclairage en occultant de moins en moins le faisceau d'éclairage et en augmentant le flux et/ou la portée du faisceau d'éclairage, tout en maintenant ce flux ou cette portée de manière à ce que celle-ci ne dépasse pas le faisceau d'éclairage du véhicule cible 20, pour enfin finir en éclairage feux de route.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé adaptatif d'éclairage frontal d'un véhicule porteur (10) créant une zone éclairée (30) devant le véhicule porteur (10) et comprenant les étapes consistant à :
- détecter la présence d'un véhicule cible (20) suivi et situé devant ledit véhicule porteur (10) ;
- mesurer une distance inter-véhicule séparant ledit véhicule porteur (10) avec le véhicule cible (20) ;
- comparer la valeur de distance inter-véhicule avec une valeur prédéterminée de non-éblouissement du véhicule cible (20) ;
- adapter l'éclairage frontal en fonction de la distance inter- véhicule par la création, dans la zone éclairée (30), d'une fenêtre sombre (40) sur le véhicule cible (20) si la valeur de distance inter-véhicule est inférieure à la valeur prédéterminée de non-éblouissement ;
**caractérisé en ce que** l'étape d'adaptation de l'éclairage comprend également une étape de régulation de l'éclairage frontal du véhicule porteur, de part et d'autre du véhicule cible, consistant à additionner la distance inter-véhicule avec une valeur correspondant à une longueur d'un faisceau d'éclairage du véhicule cible afin de limiter la longueur du faisceau lumineux du véhicule porteur (10) de part et d'autre du véhicule cible (20), de manière à ne pas dépasser la portée du faisceau (50) généré par le véhicule cible (20).

2. Procédé adaptatif selon la revendication précédente, dans lequel ladite longueur est la plus petite longueur du faisceau d'éclairage du véhicule cible.

3. Procédé adaptatif selon la revendication précédente, **caractérisé en ce que** la plus petite longueur du faisceau d'éclairage du véhicule cible est sensiblement égale à soixante mètres.

4. Procédé adaptatif selon l'une quelconque des revendications 1 à 3, **caractérisé en ce que** le véhicule cible (20) est un véhicule suivi plus lent que ledit véhicule porteur (10), et **en ce que** l'étape de régulation de l'éclairage frontal est une étape de réduction du flux lumineux et/ou de la portée au cours du temps.

5. Procédé adaptatif selon la revendication 4, **caractérisé en ce que** la régulation de l'éclairage conduit à l'adoption d'un éclairage en feux de croisement si la distance inter-véhicule est inférieure à la valeur minimale.

6. Procédé adaptatif selon l'une quelconque des revendications 1 à 3, **caractérisé en ce que** le véhicule cible (20) est un véhicule suivi plus rapide que ledit véhicule porteur (10), et **en ce que** l'étape de régulation de l'éclairage frontal est une étape d'augmentation du flux lumineux et/ou de la portée au cours du temps.

7. Procédé adaptatif selon la revendication 6, **caractérisé en ce que** la régulation de l'éclairage conduit à l'adoption d'un éclairage en feux de route si la distance inter-véhicule est supérieure à la valeur de non-éblouissement.

8. Projecteur adaptatif comprenant une source lumineuse apte à émettre un faisceau d'éclairage, des moyens de limitation adaptatifs d'une partie du faisceau d'éclairage, **caractérisé en ce qu'**il est apte à mettre en oeuvre le procédé selon l'une des revendications 1 à 7.

9. Véhicule automobile dont l'éclairage frontal est adapté par le procédé selon l'une des revendications 1 à 7.

10. Véhicule automobile comportant au moins un projecteur selon la revendication 8.

## Patentansprüche

1. Adaptives Frontbeleuchtungsverfahren eines Trägerfahrzeugs (10), das eine beleuchtete Zone (30) vor dem Trägerfahrzeug (10) schafft und die Schritte umfasst, die bestehen aus:
- Erfassen der Gegenwart eines Zielfahrzeugs (20), dem gefolgt wird und das sich vor dem Trägerfahrzeug (10) befindet;
- Messen eines Abstands zwischen Fahrzeugen, der das Trägerfahrzeug (10) von dem Zielfahrzeug (20) trennt;
- Vergleichen des Abstandwerts zwischen Fahrzeugen mit einem vorbestimmten Wert des Nichtblendens des Zielfahrzeugs (20);
- Anpassen der Frontbeleuchtung in Abhängigkeit von dem Abstand zwischen Fahrzeugen durch das Schaffen in der beleuchteten Zone (30) eines dunklen Fensters (40) auf dem Zielfahrzeug (20), wenn der Abstandswert zwischen Fahrzeugen kleiner ist als der vorbestimmte Wert des Nichtblendens ;
**dadurch gekennzeichnet, dass** der Anpassungsschritt der Beleuchtung auch einen Regelungsschritt der Frontbeleuchtung des Trägerfahrzeugs zu beiden Seiten des Zielfahrzeugs umfasst, der darin besteht, den Abstand zwischen Fahrzeugen mit einem Wert zu addieren, der einer Länge eines Beleuchtungsstrahls des Zielfahrzeugs entspricht, um die Länge des Lichtstrahls des Trägerfahrzeugs (10) zu beiden Seiten des Zielfahrzeugs (20) derart einzuschränken, dass die Reichweite des Strahls (50), der von dem Zielfahrzeug (20) erzeugt wird, nicht überschritten wird.

2. Adaptives Verfahren nach dem vorstehenden Anspruch, wobei die Länge die kleinste Länge des Beleuchtungsstrahls des Zielfahrzeugs ist.

3. Adaptives Verfahren nach dem vorstehenden Anspruch, **dadurch gekennzeichnet, dass** die kleinste Länge des Beleuchtungsstrahls des Zielfahrzeugs im Wesentlichen gleich sechzig Meter ist.

4. Adaptives Verfahren nach einem der Ansprüche 1 bis 3, **dadurch gekennzeichnet, dass** das Zielfahrzeug (20) ein Fahrzeug ist, dem gefolgt wird, das langsamer ist als das Trägerfahrzeug (10), und dass der Regulierungsschritt der Frontbeleuchtung ein Reduktionsschritt des Lichtstroms und/oder der Reichweite im Laufe der Zeit ist.

5. Adaptives Verfahren nach Anspruch 4, **dadurch gekennzeichnet, dass** die Regulierung der Beleuchtung zum Annehmen einer Beleuchtung mit Abblendlicht ist, falls der Abstand zwischen Fahrzeugen kleiner ist als der Mindestwert.

6. Adaptives Verfahren nach einem der Ansprüche 1 bis 3, **dadurch gekennzeichnet, dass** das Zielfahrzeug (20) ein Fahrzeug ist, dem gefolgt wird, das schneller ist als das Trägerfahrzeug (10), und dass der Regulierungsschritt der Frontbeleuchtung ein Erhöhungsschritt des Lichtstroms und/oder der Reichweite im Laufe der Zeit ist.

7. Adaptives Verfahren nach Anspruch 6, **dadurch gekennzeichnet, dass** die Regulierung der Beleuchtung zum Annehmen einer Beleuchtung mit Fernlicht ist, falls der Abstand zwischen Fahrzeugen größer ist als der Wert des Nichtblendens.

8. Adaptiver Scheinwerfer, der eine Lichtquelle, die geeignet ist, um einen Beleuchtungsstrahl abzugeben, adaptive Einschränkungsmittel eines Teils des Beleuchtungsstrahls umfasst, **dadurch gekennzeichnet, dass** er geeignet ist, um das Verfahren nach einem der Ansprüche 1 bis 7 umzusetzen.

9. Kraftfahrzeug, dessen Frontbeleuchtung durch das Verfahren nach einem der Ansprüche 1 bis 7 angepasst wird.

10. Kraftfahrzeug, das mindestens einen Scheinwerfer nach Anspruch 8 umfasst.

## Claims

1. An adaptive method for the front lighting of a carrier vehicle (10) creating an illuminated zone (30) in front of the carrier vehicle (10) and including the steps consisting of:
- detecting the presence of a target vehicle (20) being followed and situated in front of said carrier vehicle (10);
- measuring an inter-vehicle distance separating said carrier vehicle (10) from the target vehicle (20) ;
- comparing the inter-vehicle distance value with a predetermined value for not dazzling the target vehicle (20);
- adapting the front lighting as a function of the inter-vehicle distance by creating, in the illuminated zone (30), a dark window (40) on the target vehicle (20) if the inter-vehicle distance is below the predetermined value for not dazzling;
**characterized in that** the step of adapting the lighting also includes a step of regulating the front lighting of the carrier vehicle, on either side of the target vehicle, consisting of adding the inter-vehicle distance with a value corresponding to a length of a lighting beam of the target vehicle so as to limit the length of the light beam of the carrier vehicle (10) on either side of the target vehicle (20), so as not to exceed the range of the beam (50) generated by the target vehicle (20).

2. The adaptive method according to the preceding claim, in which said length is the smallest length of the lighting beam of the target vehicle.

3. The adaptive method according to the preceding claim, **characterized in that** the smallest length of the lighting beam of the target vehicle is substantially equal to sixty metres.

4. The adaptive method according to any one of Claims 1 to 3, **characterized in that** the target vehicle (20) is a followed vehicle which is slower than said carrier vehicle (10), and **in that** the regulation step of the front lighting is a reduction step of the luminous flux and/or of the range over time.

5. The adaptive method according to Claim 4, **characterized in that** the regulation of the lighting leads to the adoption of a dipped beam lighting if the inter-vehicle distance is less than the minimum value.

6. The adaptive method according to any one of Claims 1 to 3, **characterized in that** the target vehicle (20) is a followed vehicle which is faster than said carrier vehicle (10), and **in that** the regulation step of the front lighting is a step of increasing the luminous flux and/or the range over time.

7. The adaptive method according to Claim 6, **characterized in that** the regulation of the lighting leads to the adoption of a main beam lighting if the inter-vehicle distance is greater than the value for not dazzling.

8. An adaptive headlight including a light source suitable for emitting a lighting beam, adaptive limitation means of a portion of the lighting beam, **characterized in that** it is suitable for implementing the method according to one of Claims 1 to 7.

9. A motor vehicle, the front lighting of which is adapted by the method according to one of Claims 1 to 7.

10. A motor vehicle comprising at least one headlight according to Claim 8.
